# EUROPEAN PATENT APPLICATION

(11) **EP 4 621 718 A1**
(43) Date of publication of application: **24.09.2025**
(21) Application number: 24791944.2
(22) Date of filing: 15.04.2024
(51) Int. Cl.: G06T 11/60

(54) **IMAGE LAYER PROCESSING METHOD AND RELATED APPARATUS**

(30) Priority: 20.04.2023 CN 202310451566
(71) Applicant: Huawei Technologies Co., Ltd., Shenzhen, Guangdong 518129 (CN)
(72) Inventor: TU, Linlin, Shenzhen, Guangdong 518129 (CN); DUAN, Xiaoxiao, Shenzhen, Guangdong 518129 (CN); PENG, Guanqi, Shenzhen, Guangdong 518129 (CN); YUAN, Linjie, Shenzhen, Guangdong 518129 (CN); SHAO, Jicheng, Shenzhen, Guangdong 518129 (CN)
(74) Representative: Grünecker Patent- und Rechtsanwälte PartG mbB
(86) International application number: PCT/CN2024/087652
(87) International publication number: WO 2024/217359

(57) **Abstract**

A layer processing method and a related apparatus are provided. The method includes: displaying a first image, where the first image includes a plurality of layers; and performing layer composition based on a pre-composed layer and a first layer in response to a first user operation, to obtain a second image, where the first user operation is an operation performed by a user on the first layer in the plurality of layers, the pre-composed layer is obtained by performing pre-composition on target layers in the plurality of layers, and the target layers are at least two layers that are consecutive in a layer sequence in the plurality of layers and that satisfy an associative law. The image is obtained through layer composition based on the pre-composed layer obtained by performing pre-composition on the target layers. This helps shorten time consumed for image composition, and improve composition efficiency, thereby helping improve user experience.

## Description

This application claims priority to Chinese Patent Application No. 202310451566.5, filed with the China National Intellectual Property Administration on April 20, 2023 and entitled "LAYER PROCESSING METHOD AND RELATED APPARATUS", which is incorporated herein by reference in its entirety.

### TECHNICAL FIELD

This application relates to the field of terminal technologies, and in particular, to a layer processing method and a related apparatus.

### BACKGROUND

A layer is like a film containing elements such as text or graphics. Layers are combined to form an entire image. Generally, there is a sequence requirement for layer composition. For example, a sequence of layers from bottom to top is a layer 1 and a layer 2 to a layer n, where n is a positive integer. The layer 1 and the layer 2 are combined, then a combination result continues to be combined with the layer 3; and by analogy, until all the layers are combined, and a final image is displayed.

Currently, each time a layer is modified, all layers need to be sequentially combined to obtain a modified image. It can be imagined that if a quantity of layers is larger, each time a layer is modified, a combination process consumes longer time, and problems of display freezing and a display delay are more likely to occur. This affects user experience.

### SUMMARY

This application provides a layer processing method and a related apparatus, to improve composition efficiency, resolve problems of display freezing and a delay, and improve user experience.

According to a first aspect, this application provides a layer processing method. The method may be performed by an electronic device, or may be performed by a component (such as a chip or a chip system) configured in the electronic device, or may be implemented by a logical module or software that can implement all or some functions of the electronic device. This is not limited in this application.

For example, the method includes: displaying a first image, where the first image includes a plurality of layers; and performing layer composition based on a pre-composed layer and a first layer in response to a first user operation, to obtain a second image, where the first user operation is an operation performed by a user on the first layer in the plurality of layers, the pre-composed layer is obtained by performing pre-composition on target layers in the plurality of layers, and the target layers are at least two layers that are consecutive in a layer sequence in the plurality of layers and that satisfy an associative law.

In the foregoing technical solutions, the pre-composed layer is obtained by performing pre-composition on the at least two layers that are consecutive in the layer sequence in the plurality of layers and that satisfy the associative law. When the user performs an operation on a layer (for example, the first layer) in the plurality of layers, the electronic device may directly perform layer composition based on the pre-composed layer obtained through pre-composition. In other words, a composition operation on the layers that satisfy the associative law and that are consecutive in the layer sequence is omitted. This helps reduce a processing amount, improve composition efficiency, and resolve problems of display freezing and a display delay. In other words, after performing the operation on the layer, the user can more quickly see an image obtained based on the operation, thereby helping improve user experience.

With reference to the first aspect, in some possible implementations of the first aspect, before performing layer composition based on the pre-composed layer and the first layer in response to the first user operation, to obtain the second image, the method further includes: performing pre-composition on the target layers in the plurality of layers in response to a second user operation, to obtain the pre-composed layer.

The pre-composed layer obtained by performing pre-composition on the target layers may be directly used for subsequent layer composition. For example, when the user performs an operation on a layer, layer composition may be directly performed based on the pre-composed layer and the layer on which the user performs the operation, and there is no need to combine the plurality of layers one by one each time the user performs an operation, so that a composition processing amount is reduced, and composition efficiency is improved.

Optionally, the second user operation includes an operation of opening the first image by the user or an operation performed by the user on a second layer in the plurality of layers.

In other words, when the user opens the first image, the electronic device is triggered to perform pre-composition on the target layers to obtain the pre-composed layer, or an operation performed by the user on a layer (for example, the second layer) in the plurality of layers of the first image triggers the electronic device to perform pre-composition on the target layers to obtain the pre-composed layer.

It may be understood that, if an operation (that is, the second user operation) performed by the user on a layer (for example, the second layer) in the plurality of layers of the first image triggers the electronic device to perform pre-composition on the target layers to obtain the pre-composed layer, in response to the second user operation, the electronic device not only performs pre-composition on the target layers, but also may display a third image. The third image is an image obtained based on the second user operation, and is different from the second image obtained based on the first user operation.

Optionally, the operation performed by the user on the second layer in the plurality of layers includes: an operation of modifying the second layer by the user, or an operation of selecting a layer blending mode of the second layer by the user.

The operation performed by the user on the second layer may be the operation of modifying the second layer (for example, drawing the second layer by using a brush) by the user, or may be the operation of selecting the layer blending mode of the second layer by the user. This is not limited in this application.

Similarly, the operation (that is, the first user operation) performed by the user on the first layer in the plurality of layers may be an operation of modifying the first layer (for example, drawing the first layer by using a brush) by the user, or may be an operation of selecting a layer blending mode of the first layer by the user. This is not limited in this application.

The first layer and the second layer may be a same layer, or may be different layers. This is not limited in this application.

With reference to the first aspect, in some possible implementations of the first aspect, the first layer does not belong to the target layers.

It is not difficult to understand that, if the first layer does not belong to the target layers, that is, the target layers are not operated, layer composition may be directly performed based on the pre-composed layer obtained by performing pre-composition on the target layers.

In a possible case, the first layer is a layer other than the target layers in the plurality of layers. For example, the plurality of layers include a layer 1 to a layer 10. The layer 1 to the layer 4 are target layers, and pre-composition is performed on the layer 1 to the layer 4 to obtain a pre-composed layer 1. The layer 7 to the layer 10 are also target layers, and pre-composition is performed on the layer 7 to the layer 10 to obtain a pre-composed layer 2. The first layer is, for example, the layer 5. In other words, the first layer does not belong to the layer 1 to the layer 4, and does not belong to the layer 7 to the layer 10.

In another possible case, the plurality of layers include a plurality of groups of target layers, and the first layer belongs to a group of target layers. For example, the plurality of layers include a layer 1 to a layer 10. The layer 1 to the layer 4 are a group of target layers, and pre-composition is performed on the layer 1 to the layer 4 to obtain a pre-composed layer 1. The layer 7 to the layer 10 are also a group of target layers, and pre-composition is performed on the layer 7 to the layer 10 to obtain a pre-composed layer 2. The first layer is, for example, the layer 4. In other words, the first layer belongs to the layer 1 to the layer 4, but does not belong to the layer 7 to the layer 10. It may be understood that, in this case, the electronic device may alternatively perform layer composition based on the pre-composed layer 2 obtained by performing pre-composition on the layer 7 to the layer 10. Relatively, time for performing composition on the layer 7 to the layer 10 is saved, and composition efficiency is improved.

With reference to the first aspect, in some possible implementations of the first aspect, the target layers are determined from the plurality of layers included in the first image.

With reference to the first aspect, in some possible implementations of the first aspect, any one of the target layers satisfies: a pre-composed layer obtained by first performing pre-composition with an upper layer and then performing pre-composition with a lower layer is the same as a pre-composed layer obtained by first performing pre-composition with the lower layer and then performing pre-composition with the upper layer, where the upper layer and the lower layer are determined according to the layer sequence.

For example, the layer 2 in the target layers is used as an example. It is assumed that an upper layer of the layer 2 is the layer 3, and a lower layer of the layer 2 is the layer 1. In this case, a pre-composed layer obtained by first performing pre-composition on the layer 2 and the layer 1 and then performing pre-composition with the layer 3 is the same as a pre-composed layer obtained by first performing pre-composition on the layer 2 and the layer 3 and then performing pre-composition with the layer 1.

With reference to the first aspect, in some possible implementations of the first aspect, performing layer composition based on the pre-composed layer and the first layer in response to the first user operation, to obtain the second image includes: performing layer composition on the pre-composed layer, the first layer, and a remaining layer in response to the first user operation, to obtain the second image, where the remaining layer is a layer other than the target layers and the first layer in the plurality of layers.

According to a second aspect, this application provides another layer processing method. The method may be performed by an electronic device, or may be performed by a component (such as a chip or a chip system) configured in the electronic device, or may be implemented by a logical module or software that can implement all or some functions of the electronic device. This is not limited in this application.

For example, the method includes: determining confidence of each of at least one layer pair, where each of the at least one layer pair includes any two adjacent layers in a plurality of layers of a first image; merging a target layer pair in the at least one layer pair to obtain a merged layer, where the target layer pair is determined based on the confidence of each of the at least one layer pair; and displaying the merged layer and a layer other than the target layer pair in the plurality of layers.

In the foregoing technical solutions, the electronic device may determine the to-be-merged target layer pair based on the confidence of each of the at least one layer pair, merge the target layer pair, and display the merged layer and the layer other than the target layer pair. In this way, a quantity of displayed layers is reduced, a performance requirement on the electronic device can be lowered, and a user can view an image with a relatively large quantity of layers by using a device with relatively low performance. This helps improve user experience.

With reference to the second aspect, in some possible implementations of the second aspect, before determining the confidence of each of the at least one layer pair, the method further includes: determining that a quantity of to-be-displayed layers exceeds a maximum quantity of layers supported by the electronic device.

In a scenario in which the quantity of to-be-displayed layers exceeds the maximum quantity of layers supported by the electronic device, the target layer pair may be merged and the merged layer may be displayed according to the solutions provided in this application, to reduce the quantity of to-be-displayed layers, so that the user can smoothly open an image whose quantity of layers exceeds the maximum quantity of layers supported by the electronic device, thereby improving user experience.

With reference to the second aspect, in some possible implementations of the second aspect, the confidence of each layer pair is determined based on an association degree and/or a coverage degree of the layer pair, the association degree of the layer pair is used to reflect a physical distance between two layers in the layer pair in the first image, and the coverage degree of the layer pair is used to reflect an overlapping degree of the two layers in the layer pair in the first image.

Optionally, each layer pair includes a first layer and a second layer, and an association degree of the layer pair satisfies: association degree=max(area of the first layer, area of the second layer)/area of a union set region of the first layer and the second layer, where a boundary of the union set region is determined by a boundary of the first layer and a boundary of the second layer.

It may be understood that a smaller area of the union set region reflects a shorter physical distance between the first layer and the second layer in the first image. Therefore, independence of the two layers is lower.

Optionally, each layer pair includes a first layer and a second layer, and a coverage degree of the layer pair satisfies: coverage degree=area of an overlapping region of the first layer and the second layer/min(area of the first layer, area of the second layer).

A larger area of the overlapping region indicates a higher degree of overlapping between the two layers in the first image.

With reference to the second aspect, in some possible implementations of the second aspect, the confidence of each layer pair satisfies: confidence=association degree×K1+coverage degree×K2, where K1 is a weight of a preset association degree, K2 is a weight of a preset coverage degree, 0≤K1≤1, and 0≤K2≤1.

When K2=0, the target layer pair includes a layer pair with a highest association degree in the at least one layer pair. A higher association degree indicates a smaller area of a union set region and a shorter physical distance between a first layer and a second layer in the first image. The layer pair with the highest association degree is selected for merging, and a physical distance between two layers included in the layer pair in the first image is relatively short. This helps retain a layer pair with a relatively long distance, and further maintain independence between layers.

When K1=0, the target layer pair includes a layer pair with a lowest coverage degree in the at least one layer pair. A lower coverage degree indicates a smaller area of an overlapping region. The layer pair with the lowest coverage degree is selected for merging, and an area of an overlapping region of the layer pair is relatively small. This helps reduce a possibility of a loss of drawing details between layers.

When K1≠0 and K2≠0, the target layer pair includes a layer pair with highest confidence in the at least one layer pair. Selecting the layer pair with the highest confidence for merging can maintain independence of layers, and helps avoid a loss of drawing details, thereby reducing impact of layer merging on the first image.

With reference to the second aspect, in some possible implementations of the second aspect, before determining the confidence of each of the at least one layer pair, the method further includes: determining an area of each of the plurality of layers.

The electronic device may determine an effective area of each layer, to facilitate calculation of an association degree and/or a coverage degree, to obtain the confidence of the layer pair, and determine the target layer pair based on the confidence of each layer pair.

According to a third aspect, this application provides an electronic device, including: a display module, configured to display a first image, where the first image includes a plurality of layers; and a drawing engine module, configured to perform layer composition based on a pre-composed layer and a first layer in response to a first user operation, to obtain a second image, where the first user operation is an operation performed by a user on the first layer in the plurality of layers, the pre-composed layer is obtained by performing pre-composition on target layers in the plurality of layers, and the target layers are at least two layers that are consecutive in a layer sequence in the plurality of layers and that satisfy an associative law.

Optionally, the drawing engine module is further configured to perform pre-composition on the target layers in the plurality of layers in response to a second user operation, to obtain the pre-composed layer.

Optionally, the second user operation includes an operation of opening the first image by the user or an operation performed by the user on a second layer in the plurality of layers.

Optionally, the operation performed by the user on the second layer in the plurality of layers includes: an operation of modifying the second layer by the user, or an operation of selecting a layer blending mode of the second layer by the user.

Optionally, the first layer does not belong to the target layers.

Optionally, the drawing engine module is further configured to determine the target layers from the plurality of layers included in the first image.

Optionally, any one of the target layers satisfies: a pre-composed layer obtained by first performing pre-composition with an upper layer and then performing pre-composition with a lower layer is the same as a pre-composed layer obtained by first performing pre-composition with the lower layer and then performing pre-composition with the upper layer, where the upper layer and the lower layer are determined according to the layer sequence.

Optionally, the drawing engine module is specifically configured to perform layer composition on the pre-composed layer, the first layer, and a remaining layer, to obtain the second image, where the remaining layer is a layer other than the target layers and the first layer in the plurality of layers.

According to a fourth aspect, this application provides an electronic device, including: a drawing engine module, configured to: determine confidence of each of at least one layer pair, where each of the at least one layer pair includes any two adjacent layers in a plurality of layers of a first image; and merge a target layer pair in the at least one layer pair to obtain a merged layer, where the target layer pair is determined based on the confidence of each of the at least one layer pair; and a display module, configured to display the merged layer and a layer other than the target layer pair in the plurality of layers.

Optionally, the drawing engine module is further configured to determine that a quantity of to-be-displayed layers exceeds a maximum quantity of layers supported by the electronic device.

Optionally, the confidence of each layer pair is determined based on an association degree and/or a coverage degree of the layer pair, the association degree of the layer pair is used to reflect a physical distance between two layers in the layer pair in the first image, and the coverage degree of the layer pair is used to reflect an overlapping degree of the two layers in the layer pair in the first image.

Optionally, each layer pair includes a first layer and a second layer, and an association degree of the layer pair satisfies: association degree=max(area of the first layer, area of the second layer)/area of a union set region of the first layer and the second layer, where a boundary of the union set region is determined by a boundary of the first layer and a boundary of the second layer.

Optionally, each layer pair includes a first layer and a second layer, and a coverage degree of the layer pair satisfies: coverage degree=area of an overlapping region of the first layer and the second layer/min(area of the first layer, area of the second layer).

Optionally, the confidence of each layer pair satisfies: confidence=association degree×K1+coverage degree×K2, where K1 is a weight of a preset association degree, K2 is a weight of a preset coverage degree, 0≤K1≤1, and 0≤K2≤1.

Optionally, the drawing engine module is further configured to determine an area of each of the plurality of layers.

According to a fifth aspect, this application provides an electronic device, including a processor. The processor is configured to perform the layer processing method according to any one of the first aspect and the possible implementations of the first aspect, or is configured to perform the layer processing method according to any one of the second aspect and the possible implementations of the second aspect.

Optionally, the electronic device may further include a memory, configured to store instructions and data. The memory is coupled to the processor, and when executing the instructions stored in the memory, the processor may implement the method described in the foregoing aspects.

Optionally, the electronic device may further include a communication interface. The communication interface is configured to communicate with another device. For example, the communication interface may be a transceiver, a circuit, a bus, a module, or a communication interface of another type.

According to a sixth aspect, this application provides a chip system. The chip system includes at least one processor, configured to support implementation of the function in any one of the first aspect and the possible implementations of the first aspect, or configured to support implementation of the function in any one of the second aspect and the possible implementations of the second aspect, for example, receive or process data and/or information in the foregoing method.

In a possible design, the chip system further includes a memory, the memory is configured to store program instructions and data, and the memory is located inside or outside the processor.

The chip system may include a chip, or may include a chip and another discrete component.

According to a seventh aspect, this application provides a computer-readable storage medium, including a computer program. When the computer program is run on a computer, the computer is enabled to implement the method according to any one of the first aspect and the possible implementations of the first aspect, or implement the method according to any one of the second aspect and the possible implementations of the second aspect.

According to an eighth aspect, this application provides a computer program product. The computer program product includes a computer program (which may also be referred to as code or instructions), and when the computer program is run, a computer is enabled to perform the method according to any one of the first aspect and the possible implementations of the first aspect, or perform the method according to any one of the second aspect and the possible implementations of the second aspect.

It should be understood that, the third aspect to the eighth aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of a hardware structure of an electronic device according to an embodiment of this application;
FIG. 2 is a block diagram of a software and hardware structure of an electronic device according to an embodiment of this application;
FIG. 3 is a diagram of a scenario to which a method according to an embodiment of this application is applicable;
FIG. 4 is a diagram of an architecture of a layer processing system according to an embodiment of this application;
FIG. 5 is a schematic flowchart of a layer processing method according to an embodiment of this application;
FIG. 6 is a diagram of performing pre-composition on target layers according to an embodiment of this application;
FIG. 7 is another diagram of performing pre-composition on target layers according to an embodiment of this application;
FIG. 8 is another diagram of performing pre-composition on target layers according to an embodiment of this application;
FIG. 9 is another diagram of performing pre-composition on target layers according to an embodiment of this application;
FIG. 10 is a diagram of a detailed procedure of performing pre-composition on target layers according to an embodiment of this application;
FIG. 11 is a diagram of a detailed procedure of changing a layer blending mode according to an embodiment of this application;
FIG. 12 is a schematic flowchart of another layer processing method according to an embodiment of this application;
FIG. 13 is a diagram of an effective area of a layer according to an embodiment of this application;
FIG. 14 is a diagram of a union set region according to an embodiment of this application;
FIG. 15 is a diagram of an overlapping region according to an embodiment of this application; and
FIG. 16 is a diagram of a detailed procedure of a layer merging process according to an embodiment of this application.

### DESCRIPTION OF EMBODIMENTS

The following describes technical solutions of this application with reference to accompanying drawings.

To facilitate understanding of embodiments of this application, the following descriptions are first provided.

First, for ease of clearly describing the technical solutions in embodiments of this application, the words such as "first" and "second" are used to distinguish between same or similar items whose functions are basically the same in embodiments of this application. For example, a first layer and a second layer are merely used to distinguish between different layers, but not limit a sequence thereof. A person skilled in the art may understand that the words such as "first" and "second" do not limit a quantity or an execution order, and the words such as "first" and "second" do not necessarily indicate a specific difference.

Second, in embodiments of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between associated objects, but does not exclude an "and" relationship between the associated objects. A specific indicated meaning may be understood with reference to the context. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c. Herein, a, b, and c may be singular or plural.

Third, the electronic device mentioned in embodiments of this application may be any type of device, for example, including but not limited to a mobile phone (mobile phone), a personal computer (personal computer, PC) (for example, a desktop computer, a notebook computer, a palmtop computer, or a tablet computer (pad)), a wireless terminal (such as a smart television) in a smart home (smart home), a vehicle-mounted device, a wearable device, or the like.

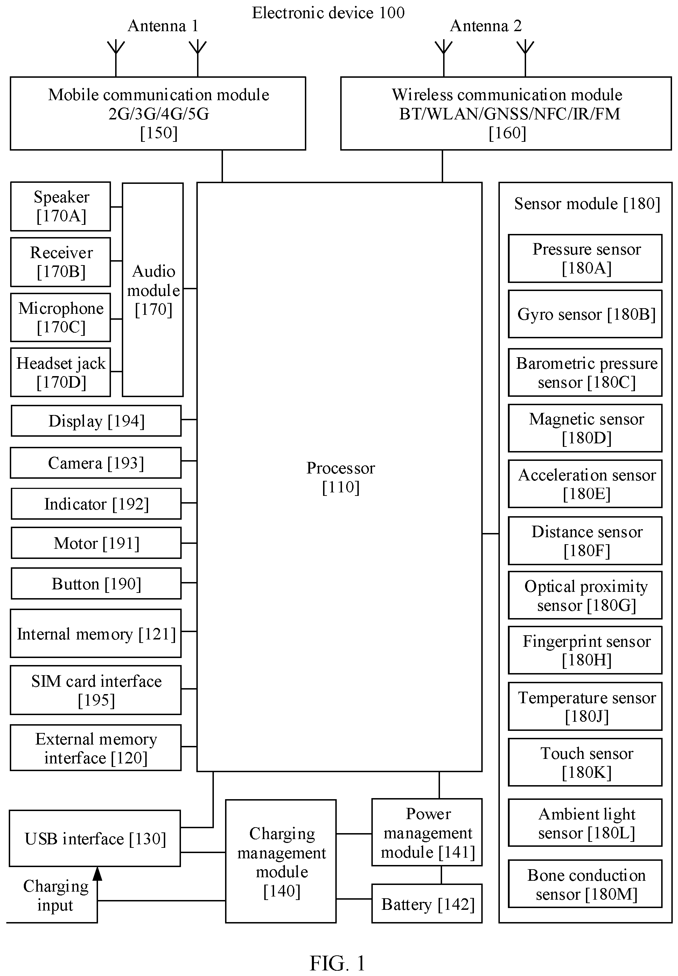

The following describes in detail a possible hardware structure of the electronic device with reference to FIG. 1.

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a microcontroller unit (microcontroller unit, MCU), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent components, or may be integrated into one or more processors.

In this application, the electronic device 100 may implement a display function by using the GPU, the display 194, the application processor, and the like. The GPU is a microprocessor for image processing, and is connected to the display 194 and the application processor. The GPU is configured to perform mathematical and geometric calculation and render graphics. For example, the GPU is configured to render a composed image. The processor 110 may include one or more GPUs that execute program instructions to generate or change display information.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In this application, the memory may be configured to store data of a pre-composed layer obtained by performing pre-composition on target layers, so that the processor 110 invokes the data to perform image composition.

The processor 110 may perform different operations by executing instructions, to implement different functions. For example, the instructions may be instructions pre-stored in the memory before the device is delivered from a factory, or may be instructions read from a new application (application, APP) after a user installs the app in a use process. This is not limited in embodiments of this application.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology.

The display 194 is configured to display an image, a video, and the like. The display 194 includes a display panel. In some embodiments, the electronic device 100 may include one or more displays 194.

The electronic device 100 may implement a photographing function by using the ISP, the camera 193, the video codec, the GPU, the display 194, the application processor, and the like.

The camera 193 is configured to capture a still image or a video. An optical image of an object is generated by using a lens and projected onto a photosensitive element. In some embodiments, the electronic device 100 may include one or more cameras 193.

The external memory interface 120 may be configured to connect to an external memory card, such as a micro SD card, to extend a storage capability of the electronic device 100. The external memory card communicates with the processor 110 through the external memory interface 120, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an application program required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5-millimeter (millimeter, mm) open mobile terminal platform (open mobile terminal platform, OMTP) standard interface or a cellular telecommunications industry association of the USA (cellular telecommunications industry association of the USA, CTIA) standard interface.

The button 190 includes an on/off button (or referred to as a power button), a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

It may be understood that the structure shown in this application does not constitute a specific limitation on the electronic device 100. In some other embodiments, the electronic device 100 may include more or fewer components than those shown in the figure, or combine some components, or split some components, or have different component arrangements. The components shown in the figure may be implemented by hardware, software, or a combination of software and hardware.

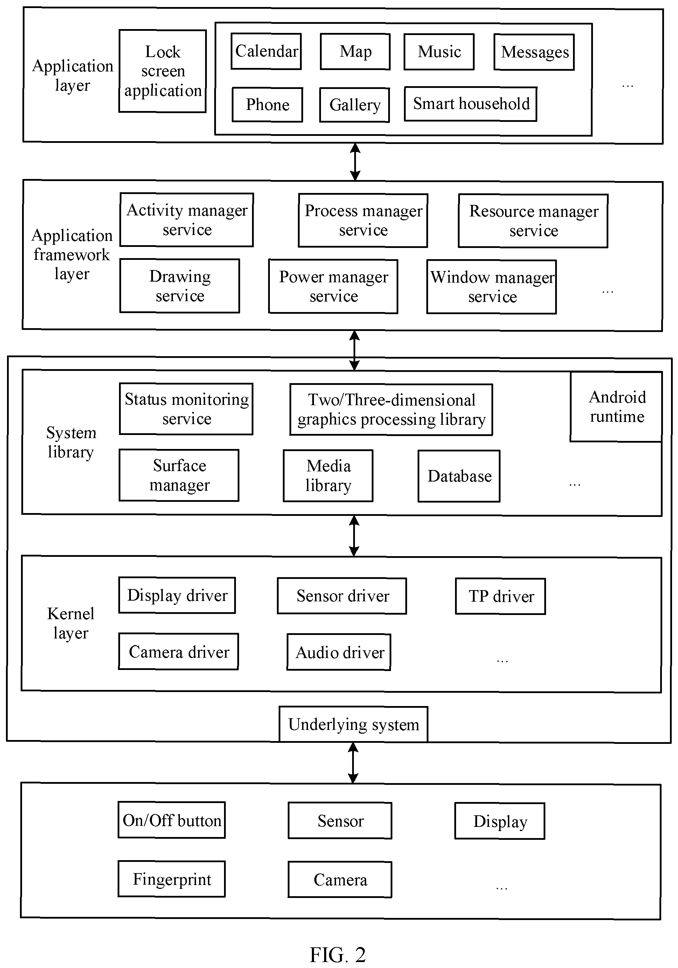

The following describes in detail a possible software structure of a terminal with reference to FIG. 2.

FIG. 2 is a block diagram of a software and hardware structure of an electronic device applicable to a method according to an embodiment of this application. For example, FIG. 2 may be a block diagram of a software and hardware structure of a mobile phone.

As shown in FIG. 2, in a layered architecture, software is divided into several layers, and each layer has a clear role and task. The layers communicate with each other through a software interface. In some embodiments, an Android (Android) system is divided into four layers: an application layer, an application framework layer, an Android runtime (Android runtime) and system library, and a kernel layer from top to bottom.

The application layer may include a series of application packages. As shown in FIG. 2, the application layer may include a lock screen application, a desktop application, and the like. The desktop application may further include, for example, Calendar, Map, Music, Messages, Phone, Gallery, and Smart household.

In this application, the application layer may further include, for example, a drawing app, and the drawing app may be configured to draw an image and the like.

The application framework layer provides an application programming interface (application programming interface, API) and a programming framework for applications at the application layer. The application framework layer includes some predefined functions. As shown in FIG. 2, the application framework layer may include an activity manager service, a process manager service, a resource manager service, a drawing service, a power manager service (power manager service, PMS), a window manager service, and the like. Specific services included are not limited in this application.

The drawing service may be used to draw an interface. For example, the drawing service may convert an application layout and a resource into a format that can be recognized by a display service at the kernel layer. The drawing service may send the drawn interface to the display service at the kernel layer, to display the drawn interface.

The Android runtime may include a core library and a virtual machine. The Android runtime is responsible for scheduling and managing the Android system.

The core library may include two parts: a function that needs to be invoked by using the Java language, and a core library of the Android system.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, such as a status monitoring service, a surface manager (surface manager), a media library (media libraries), a three-dimensional graphics processing library (for example, OpenGL ES), and a two-dimensional (2 dimensions, 2D) graphics engine (for example, SGL).

The status monitoring service is used to determine a specific orientation of the mobile phone, a physical status of a flexible screen, and the like based on monitoring data reported by the kernel layer. The surface manager is configured to manage a display subsystem and provide fusion of 2D and three-dimensional (3 dimensions, 3D) layers for a plurality of applications. The media library supports playback and recording in a plurality of commonly used audio and video formats, and static image files. The media library may support a plurality of audio and video coding formats, such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a power manager service, a sensor service (which may also be referred to as a sensor driver), a display service (which may also be referred to as a display driver), a camera driver, an audio driver, and the like. This is not limited in embodiments of this application.

Still as shown in FIG. 2, the system library, the kernel layer, and the like below the application framework layer may be referred to as an underlying system. The underlying system includes an underlying display system used to provide the display service. For example, the underlying display system includes the display driver at the kernel layer and the surface manager in the system library.

Below the underlying system is hardware, and the hardware can provide a basis for software running. As shown in FIG. 2, hardware of the terminal may include but is not limited to a power button, a sensor, a display, a fingerprint, a camera, and the like.

It should be understood that structures of the terminals shown in FIG. 1 and FIG. 2 are merely examples, and should not constitute any limitation on embodiments of this application.

To facilitate understanding of a layer processing method provided in embodiments of this application, an application scenario of the method provided in embodiments of this application is described below. It may be understood that the application scenario described in embodiments of this application is used to more clearly describe the technical solutions of embodiments of this application, and does not constitute a limitation on the technical solutions provided in embodiments of this application.

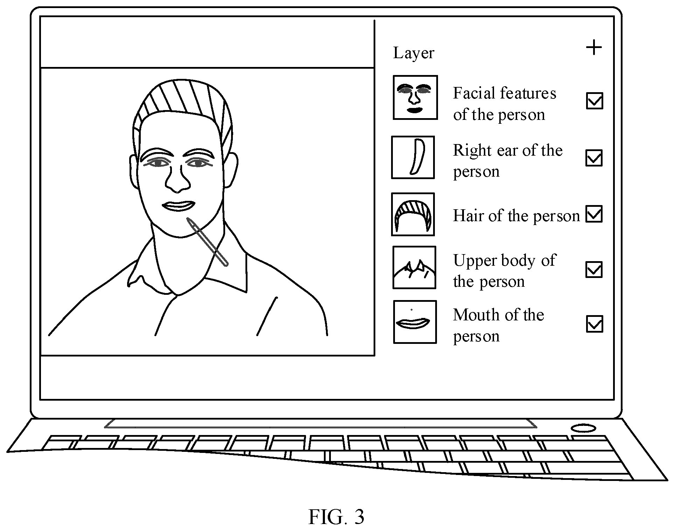

FIG. 3 is a diagram of a scenario to which a method according to an embodiment of this application is applicable.

As shown in FIG. 3, a user opens an image by using a drawing app, and modifies some elements (that is, a layer) in the image, for example, modifies some elements in the image by using a brush. It may be understood that the image includes a plurality of layers, and the layers are combined in sequence to form the entire image. For example, the layers in the image shown in FIG. 3 includes: a layer of facial features of a person, a layer of a right ear of the person, a layer of hair of the person, a layer of an upper body of the person, a layer of a mouth of the person, and the like. The image shown in FIG. 3 and the layers included in the image are merely an example, and should not constitute any limitation on embodiments of this application.

Each time the user modifies a layer, an electronic device (for example, a computer shown in FIG. 3) needs to combine all the layers according to a layer sequence (for example, from bottom to top) to obtain a modified image, and then display the modified image. It can be imagined that if a quantity of layers is larger, each time a layer is modified, a combination process consumes longer time, and problems of display freezing and a display delay are more likely to occur. This affects user experience.

To resolve the foregoing problems, this application provides a layer processing method. Pre-composition is performed on at least two layers (that is, target layers) that satisfy an associative law and that are consecutive in a layer sequence in a plurality of layers included in an image, to obtain and store data of a pre-composed layer. In this way, the data of the pre-composed layer may be directly used to compose a modified image. For example, when a layer (for example, a first layer) in the image is modified, the data of the pre-composed layer may be used, to avoid combining the layers one by one according to the layer sequence each time, and reduce a processing amount, so that image composition efficiency is improved, display freezing is reduced, and smoothness is improved. In other words, once a user performs modification, a modified image can be seen in a timely manner, thereby helping improve user experience.

Before embodiments of this application are described in detail, to better understand the method provided in embodiments of this application, the following briefly describes terms in this application.
1. Layer: The layer means a plurality of widgets that form an image. Each widget is separately drawn as one unit. A layer is like a film containing elements such as text or graphics. Layers are combined to form an entire image, for example, a plurality of layers included in an image shown in FIG. 3. Generally, there is a sequence requirement for layer composition. For example, a sequence of layers from bottom to top (which may be understood as that an image is viewed from top to bottom, and the layers are stacked from bottom to top) is a layer 1 and a layer 2 to a layer n, where n is a positive integer. The layer 1 and the layer 2 are combined, then a combination result continues to be combined with the layer 3, and by analogy, until all the layers are combined, and a final image is displayed.
2. Associative law: The associative law means that in an expression including at least two operators that can be combined, provided that positions of the operators do not change, an operation sequence of the operators does not affect a value obtained through operation. For example, in this application, that layers satisfy an associative law means that a layer composition sequence does not affect a composition result.
3. Layer composition: The layer composition may also be referred to as layer blending, and means that elements of two layers are combined. For example, in this application, an image is obtained after a plurality of layers are combined according to a layer sequence. An electronic device may display an image obtained by combining a plurality of layers, and may further display the plurality of layers, so that a user selects a layer that needs to be modified. A pre-composed layer in this application is a layer obtained by combining target layers, may be considered as a result of combining the target layers, and does not need to be displayed to the user.
   Layer blending (or referred to as layer composition) has different blending modes. The layer blending mode is a manner in which a color of a layer is superimposed with a color of a lower layer of the layer. Different results are generated when different blending modes (or referred to as composition modes) are selected for two layers. Common layer blending modes include but are not limited to: normal, darken, multiply, color burn, linear burn, dark color, lighten, color filter, color dodge, linear dodge, light color, overlay (or cover), soft light, hard light, linear light, pin light, hard mix, difference, exclusion, subtract, divide, hue, saturation, color, luminosity, and the like.
4. Layer merging: The layer merging means that at least two layers are merged to form one layer in this application, which, for example, may be referred to as a merged layer. In this application, layer merging is irreversible. In other words, after layer merging, the at least two layers that form the merged layer are not displayed.

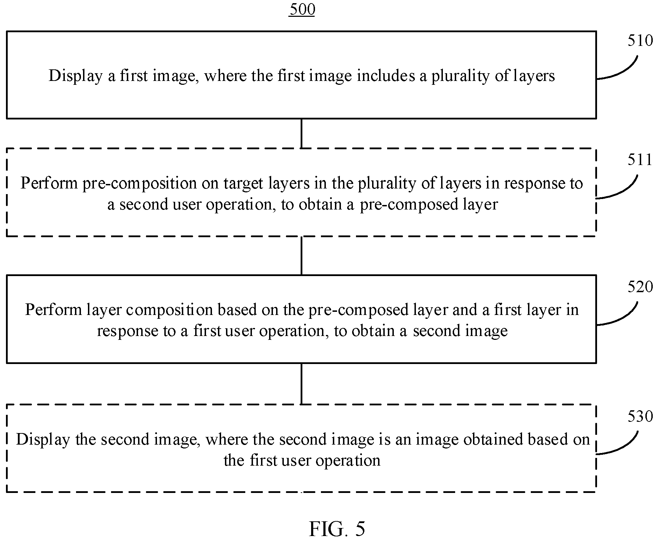

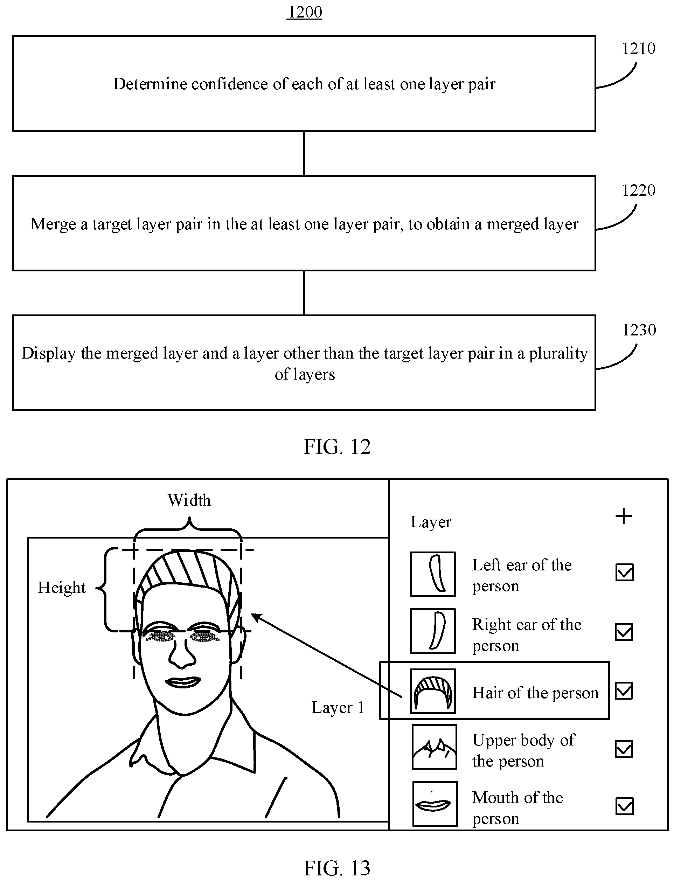

It should be understood that, in this application, layer composition and layer merging are different. For example, in an embodiment shown in FIG. 5, a pre-composed layer obtained by performing pre-composition on target layers is intermediate data in a layer composition process, and the pre-composed layer continues to be used for layer composition, to obtain an image. The pre-composed layer is not displayed to a user. In an embodiment shown in FIG. 12, layer merging means that two or more layers are merged to obtain one layer. The layer may include content of the two or more layers, but a quantity of layers is reduced. For example, an image 1 has 10 layers: a layer 1 to a layer 10. Two of the layers (for example, the layer 9 and the layer 10) are merged to obtain a layer A. The layer A includes content of the layer 9 and the layer 10. However, the image 1 currently has only nine layers: the layer 1 to the layer 8 and the layer A. When the image 1 is opened, an electronic device may display the layer 1 to the layer 8 and the layer A to the user.

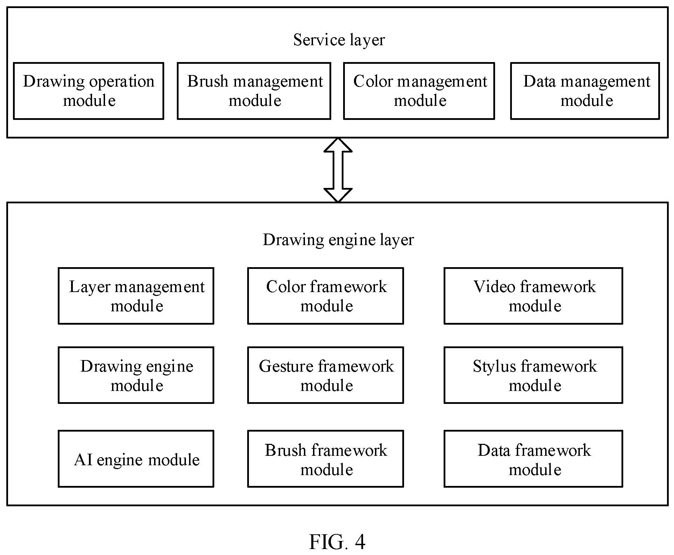

Before the layer processing method provided in this application is described in detail, the following describes in detail an architecture of a layer processing system provided in embodiments of this application with reference to FIG. 4.

FIG. 4 is a diagram of an architecture of a layer processing system according to an embodiment of this application.

The system includes a service layer and a drawing engine layer. The service layer may include a plurality of functional modules, such as a drawing operation module, a brush management module, a color management module, and a data management module. The drawing engine layer may also include a plurality of functional modules, such as a layer management module, a color framework module, a video framework module, a drawing engine module, a gesture framework module, a stylus framework module, an artificial intelligence (artificial intelligence, AI) engine module, a brush framework module, and a data framework module. In this application, the system (including the service layer and the drawing engine layer) may be packaged into an application, and configured at the application layer shown in FIG. 2. Alternatively, each functional module at the service layer may be configured at the application layer, and each functional module at the drawing engine layer may be configured at the application framework layer shown in FIG. 2. This is not limited in this application.

In this application, the service layer may be used for human-computer interaction, for example, sending an identifier of an operated layer to the drawing engine layer in response to a user operation. The drawing engine module may be configured to perform pre-composition on target layers to obtain a pre-composed layer; and may be further configured to determine a layer that satisfies an associative law, to determine the target layers. The data framework module may be configured to store data, for example, data of an active layer, data of a foreground layer, and data of a background layer.

It should be understood that the functional modules included in the foregoing system are merely examples. In another embodiment, more or fewer modules may be included. For example, a drawing framework module may be further included. The drawing framework module may be configured to notify the drawing engine module of a message at the service layer. For another example, a display module may be further included. The display module may be configured to display an image and each layer of the image. For example, in this application, the display module may be configured to display a first image and a plurality of layers included in the first image.

It should be further understood that division into the functional modules of the system in embodiments of this application is an example, and is merely logical function division. In actual implementation, there may be another division manner. In addition, functional modules in embodiments of this application may be integrated into one processor, or each module may exist alone physically, or two or more modules may be integrated into one module. The integrated module may be implemented in a form of hardware, or may be implemented in a form of a software functional module.

The layer processing method provided in this application is described in detail below with reference to specific embodiments.

It should be understood that the method is described from a perspective of an electronic device in the following embodiments, but this should not constitute any limitation on an execution body of the method. The method provided in embodiments of this application can be performed, provided that a computer program that records the method provided in embodiments of this application can be run. For example, the electronic device may alternatively be replaced with a component (for example, a chip or a chip system) configured in the electronic device, or another functional module that can invoke and execute a program. This is not limited in embodiments of this application.

FIG. 5 is a schematic flowchart of a layer processing method 500 according to an embodiment of this application. The method 500 shown in FIG. 5 may include step 510 and step 520. The following describes the steps in the method 500 in detail.

In step 510, a first image is displayed, where the first image includes a plurality of layers.

The first image may be an image in any format, and the first image is an image obtained by sequentially combining the plurality of layers according to a layer sequence.

It should be understood that if a layer of an image is modified, a layer blending mode of a layer is selected, or the like, the layer changes, and an image obtained by combining the layer and another layer is different from a previous image. Therefore, for ease of differentiation, if a layer in the plurality of layers of the first image is modified or the like, an obtained image is referred to as a second image. Quantities of layers of images are consistent.

For example, in a drawing scenario, in response to an operation of opening a first image by a user by using a drawing app, an electronic device displays the first image, where the first image includes a plurality of layers. In addition, the electronic device may further display the plurality of layers of the first image, so that the user selects a layer to be modified or a layer whose layer blending mode needs to be changed.

In step 520, layer composition is performed based on a pre-composed layer and a first layer in response to a first user operation, to obtain a second image.

The first user operation is an operation performed by the user on the first layer in the plurality of layers of the first image. The pre-composed layer is obtained by performing pre-composition on target layers in the plurality of layers, and the target layers are at least two layers that are consecutive in the layer sequence in the plurality of layers and that satisfy an associative law.

In other words, in response to the operation performed by the user on the first layer in the first image, the electronic device may directly perform layer composition based on the first layer and the pre-composed layer that is obtained by performing pre-composition on the target layers, to obtain the second image.

In a possible case, the first layer is a layer other than the target layers in the plurality of layers. For example, the plurality of layers include a layer 1 to a layer 10. The layer 1 to the layer 4 are target layers, and pre-composition is performed on the layer 1 to the layer 4 to obtain a pre-composed layer 1. The layer 7 to the layer 10 are also target layers, and pre-composition is performed on the layer 7 to the layer 10 to obtain a pre-composed layer 2. The first layer is, for example, the layer 5. In other words, the first layer does not belong to the layer 1 to the layer 4, and does not belong to the layer 7 to the layer 10. In this case, the electronic device may perform layer composition based on the pre-composed layer 1, the pre-composed layer 2, and the layer 5, and more specifically, sequentially perform layer composition on the pre-composed layer 1, the layer 5, the layer 6, and the pre-composed layer 2.

In another possible case, the plurality of layers include a plurality of groups of target layers, and the first layer belongs to a group of target layers. For example, the plurality of layers include a layer 1 to a layer 10. The layer 1 to the layer 4 are a group of target layers, and pre-composition is performed on the layer 1 to the layer 4 to obtain a pre-composed layer 1. The layer 7 to the layer 10 are also a group of target layers, and pre-composition is performed on the layer 7 to the layer 10 to obtain a pre-composed layer 2. The first layer is, for example, the layer 4. In other words, the first layer belongs to the layer 1 to the layer 4, but does not belong to the layer 7 to the layer 10. It may be understood that, in this case, the electronic device may alternatively perform pre-composition based on the layer 7 to the layer 10, and perform layer composition based on the obtained pre-composed layer 2. For example, the electronic device may perform layer composition based on the pre-composed layer 2 and the layer 4, and more specifically, sequentially perform layer composition on the layer 1, the layer 2, the layer 3, the layer 4, the layer 5, the layer 6, and the pre-composed layer 2.

Optionally, the operation (that is, the first user operation) performed by the user on the first layer in the plurality of layers of the first image may be an operation of modifying the first layer (for example, drawing the first layer by using a brush) by the user, or may be an operation of selecting a layer blending mode of the first layer by the user. This is not limited in this application.

As described above, the pre-composed layer is obtained by performing pre-composition on the target layers. The following describes in detail a process of determining the target layers and performing pre-composition on the target layers.

Optionally, after step 510 and before step 520, the method 500 further includes step 511: Perform pre-composition on the target layers in the plurality of layers in response to a second user operation, to obtain the pre-composed layer.

Pre-composition is relative to layer composition caused by image modification. For example, pre-composition is performed on the target layers to obtain the pre-composed layer. The pre-composed layer may be used to compose a new image when the image is modified next time. A layer obtained through pre-composition may be referred to as a pre-composed layer.

It may be understood that, in this application, the pre-composed layer is not displayed on a screen, that is, the user is unaware of the pre-composed layer.

Optionally, the second user operation includes an operation of opening the first image by the user or an operation performed by the user on a second layer in the plurality of layers.

In other words, when the user opens the first image, the electronic device is triggered to perform pre-composition on the target layers to obtain the pre-composed layer, or an operation performed by the user on a layer (for example, the second layer) in the plurality of layers of the first image triggers the electronic device to perform pre-composition on the target layers to obtain the pre-composed layer. The following uses an example in which an operation performed by the user on a layer (for example, the second layer) in the plurality of layers of the first image triggers the electronic device to perform pre-composition on the target layers.

If an operation (that is, the second user operation) performed by the user on a layer (for example, the second layer) in the plurality of layers of the first image triggers the electronic device to perform pre-composition on the target layers to obtain the pre-composed layer, in response to the second user operation, the electronic device not only performs pre-composition on the target layers, but also may display a third image. The third image is an image obtained based on the second user operation, and may be different from the second image obtained based on the first user operation.

Optionally, the operation performed by the user on the second layer in the plurality of layers may be the operation of modifying the second layer by the user, or may be the operation of selecting the layer blending mode of the second layer by the user. This is not limited in this application.

The following describes the target layer in detail.

A layer sequence of the at least two layers included in the target layers is continuous, and each of the at least two layers satisfies the associative law.

That any one of the target layers satisfies the associative law means: a pre-composed layer obtained by first performing pre-composition with an upper layer and then performing pre-composition with a lower layer is the same as a pre-composed layer obtained by first performing pre-composition with the lower layer and then performing pre-composition with the upper layer, where the upper layer and the lower layer are determined according to the layer sequence. In other words, changing a sequence of layer pre-composition does not affect a pre-composition result.

For example, a layer 1, a layer 2, and a layer 3 are three layers that are consecutive in a layer sequence. If a pre-composed layer obtained by first performing pre-composition on the layer 2 and the layer 3 and then performing pre-composition with the layer 1 is the same as a pre-composed layer obtained by first performing pre-composition on the layer 2 and the layer 1 and then performing pre-composition with the layer 3, the layer 2 satisfies the associative law.

The following describes in detail a process of determining the target layers from the plurality of layers of the first image.

In a possible design, the electronic device traverses each of the plurality of layers included in the first image, and determines at least two layers that satisfy the associative law and that are consecutive in the layer sequence, where the at least two layers are the target layers.

In another possible design, the electronic device traverses each of the plurality of layers included in the first image, determines a layer that does not satisfy the associative law, and when finding a layer that does not satisfy the associative law, uses the layer that does not satisfy the associative law as a boundary to continue to traverse an upper layer (or a lower layer) of the layer that does not satisfy the associative law, and then determines, based on the layer that does not satisfy the associative law, at least two layers that satisfy the associative law and that are consecutive in the layer sequence, where the at least two layers are the target layers. After determining the target layers, the electronic device performs pre-composition on the target layers to obtain the pre-composed layer.

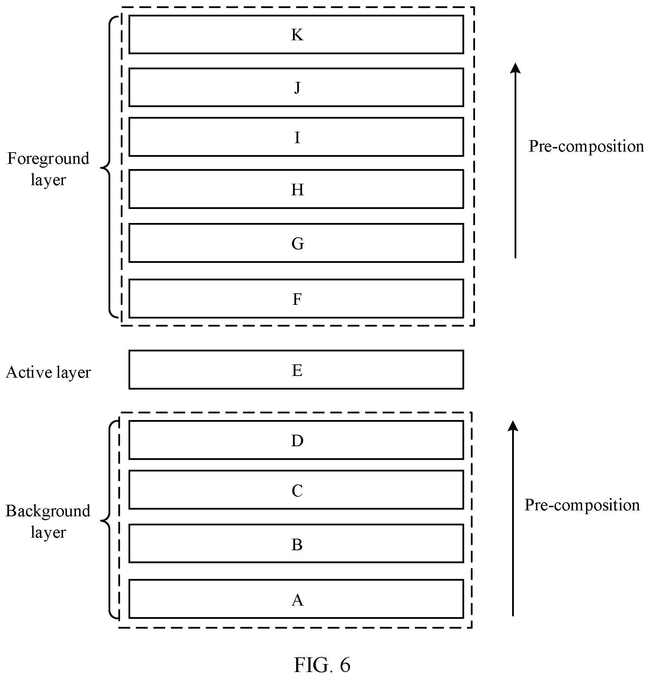

With reference to FIG. 6 to FIG. 9, the following provides several examples of performing pre-composition on the target layers.

In this application, a layer (for example, the first layer) on which the user performs an operation may be referred to as an active layer, a layer above the active layer may be referred to as a foreground layer, and a layer below the active layer may be referred to as a background layer. It may be understood that, when the active layer changes (for example, a layer on which the user performs an operation at a time is inconsistent with a layer on which the user performs an operation next time), layers included in the foreground layer and the background layer also vary.

FIG. 6 is a diagram of performing pre-composition on target layers according to an embodiment of this application.

As shown in FIG. 6, the plurality of layers included in the first image are a layer A, a layer B, a layer C, a layer D, a layer E, a layer F, a layer G, a layer H, a layer I, a layer J, and a layer K. An active layer (that is, a layer on which the user performs an operation) is the layer E, foreground layers are the layer F to the layer K, and background layers are the layer A to the layer D. The electronic device determines that the layer A to the layer D satisfy the associative law, and the layer F to the layer K satisfy the associative law. Further, the electronic device performs pre-composition on the layer A to the layer D to obtain a pre-composed layer 1, and performs pre-composition on the layer F to the layer K to obtain a pre-composed layer 2. The layer A to the layer D are an example of the target layers, and the layer F to the layer K are also an example of the target layers. The electronic device may store the pre-composed layer 1 and the pre-composed layer 2, so that when the layer E is modified next time, the pre-composed layers can be directly used to compose an image.

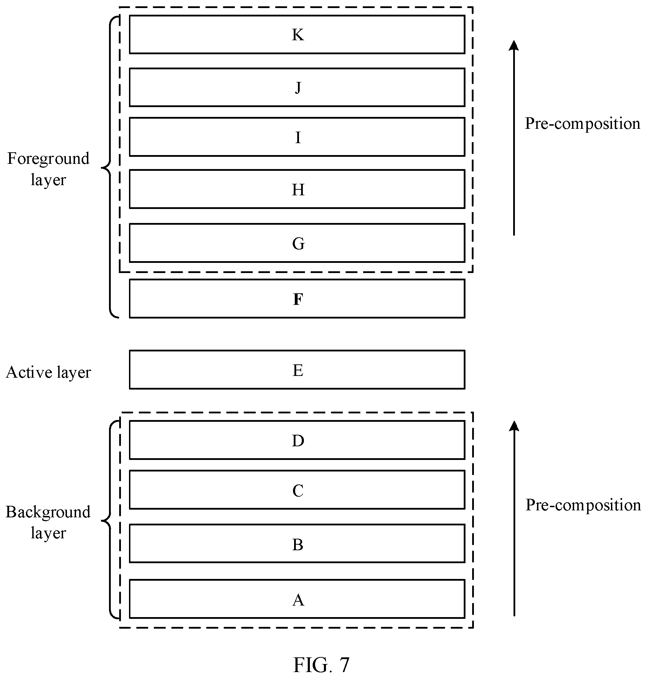

FIG. 7 is another diagram of performing pre-composition on target layers according to an embodiment of this application.

As shown in FIG. 7, the plurality of layers included in the first image are a layer A to a layer K. An active layer (that is, a layer on which the user performs an operation) is the layer E, foreground layers are the layer F to the layer K, and background layers are the layer A to the layer D. The electronic device determines that the layer A to the layer D satisfy the associative law, the layer G to the layer K satisfy the associative law, and the layer F does not satisfy the associative law. Further, pre-composition is performed on the layer A to the layer D to obtain a pre-composed layer 1, and pre-composition is performed on the layer G to the layer K to obtain a pre-composed layer 2. The layer A to the layer D are an example of the target layers, and the layer G to the layer K are also an example of the target layers. The electronic device may store the pre-composed layer 1 and the pre-composed layer 2, so that when the layer E or the layer F is modified next time, the pre-composed layers can be directly used to compose an image.

It should be understood that, when a layer in the layer G to the layer K is modified next time, the pre-composed layer 1 obtained through pre-composition based on the layer A to the layer D can be directly used to compose an image. When a layer in the layer A to the layer D is modified next time, the pre-composed layer 2 obtained through pre-composition based on the layer G to the layer K can be directly used to compose an image.

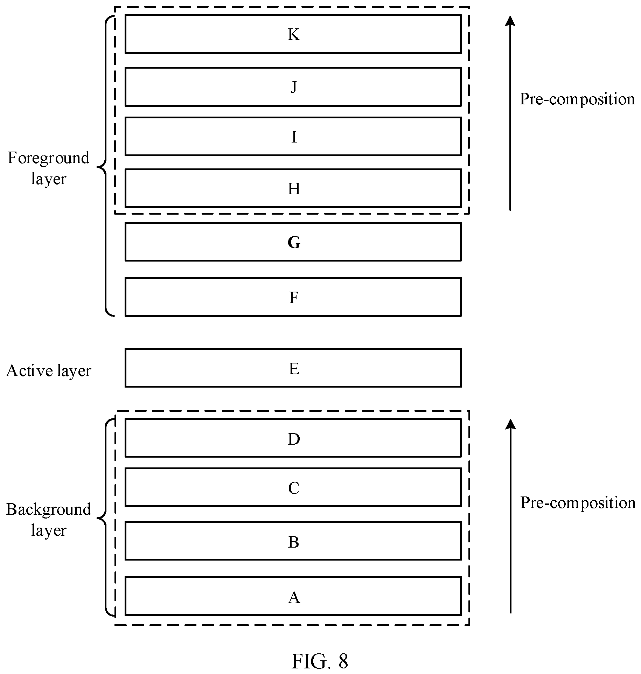

FIG. 8 is another diagram of performing pre-composition on target layers according to an embodiment of this application.

As shown in FIG. 8, the plurality of layers included in the first image are a layer A to a layer K. An active layer (that is, a layer on which the user performs an operation) is the layer E, foreground layers are the layer F to the layer K, and background layers are the layer A to the layer D. The electronic device determines that the layer A to the layer D satisfy the associative law, the layer F and the layer H to the layer K satisfy the associative law, and the layer G does not satisfy the associative law. The layer A to the layer D are consecutive in sequence and therefore may be referred to as target layers. The layer H to the layer K are consecutive in sequence and may be referred to as target layers. The layer F is only one layer, and is not consecutive with the layer H or the layer D, and therefore cannot be used as a target layer. Further, pre-composition is performed on the layer A to the layer D to obtain a pre-composed layer 1, and pre-composition is performed on the layer H to the layer K to obtain a pre-composed layer 2. The layer A to the layer D are an example of the target layers, and the layer H to the layer K are also an example of the target layers. The electronic device may store the pre-composed layer 1 and the pre-composed layer 2, so that when a layer is modified next time, the pre-composed layers can be directly used to compose an image.

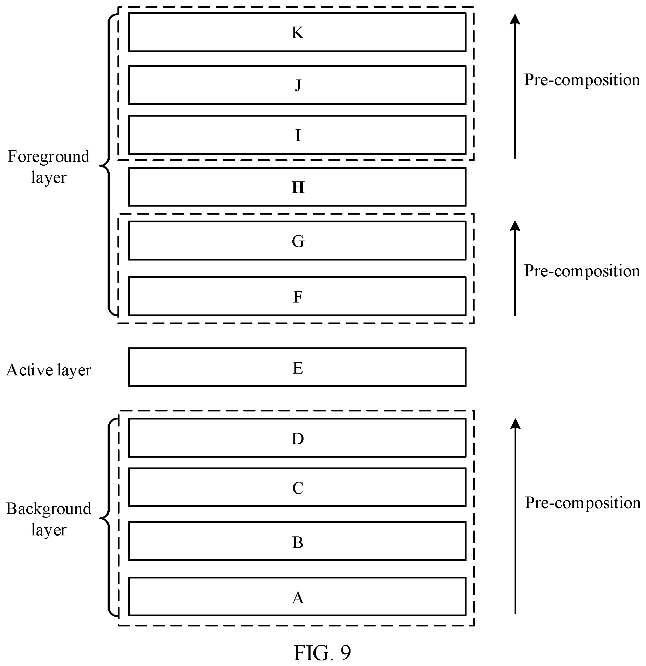

FIG. 9 is another diagram of performing pre-composition on target layers according to an embodiment of this application.

As shown in FIG. 9, the plurality of layers included in the first image are a layer A to a layer K. An active layer (that is, a layer on which the user performs an operation) is the layer E, foreground layers are the layer F to the layer K, and background layers are the layer A to the layer D. The electronic device determines that the layer A to the layer D satisfy the associative law, the layer F, the layer G, the layer I, the layer J, and the layer K satisfy the associative law, and the layer H does not satisfy the associative law. The layer A to the layer D are consecutive in sequence and therefore may be referred to as target layers. The layer F and the layer G are consecutive in sequence and may be referred to as target layers. The layer I to the layer K are consecutive in sequence and may be used as target layers. Further, pre-composition is performed on the layer A to the layer D to obtain a pre-composed layer 1, pre-composition is performed on the layer G and the layer F to obtain a pre-composed layer 2, and pre-composition is performed on the layer I to the layer K to obtain a pre-composed layer 3. The layer A to the layer D are an example of the target layers, the layer G and the layer F are also an example of the target layers, and the layer I to the layer K are also an example of the target layers. The electronic device may store the pre-composed layer 1, the pre-composed layer 2, and the pre-composed layer 3, so that when a layer is modified next time, the pre-composed layers can be directly used to compose an image.

It can be learned from the foregoing description that, in response to the operation (that is, the second user operation) performed by the user on the second layer in the plurality of layers, the electronic device may perform pre-composition on the target layers to obtain the pre-composed layers, and may further perform layer composition to obtain and display the third image. The third image is an image obtained based on the second user operation. Further, in response to the operation (that is, the first user operation) performed by the user on the first layer in the plurality of layers (in this case, the plurality of layers are a plurality of layers of the third image, and content of the plurality of layers of the first image may be different from content of the plurality of layers of the third image because the user changes the second layer of the first image), the electronic device may directly perform layer composition based on the pre-composed layer and the first layer, to obtain the second image. The second image may be understood as an image obtained based on an operation performed by the user on the first layer in the third image. The first layer in the third image and the first layer in the first image may be considered as a same layer, but content of the first layer in the first image may be different from content of the first layer in the third image. For example, the first layer and the second layer are a same layer, that is, a same layer operated two times. In this case, the content of the first layer in the third image is different from the content of the first layer in the first image. With reference to FIG. 6 to FIG. 9, the following separately describes processes of obtaining the third image and obtaining the second image.

The following first describes the process of obtaining the third image.

In a possible design, the electronic device obtains the third image based on the pre-composed layer. A layer E is an example of the second layer.

In an example, as shown in FIG. 6, the electronic device performs pre-composition on a layer A to a layer D to obtain a pre-composed layer 1, and performs pre-composition on a layer F to a layer K to obtain a pre-composed layer 2. Further, layer composition is sequentially performed on the pre-composed layer 1, the layer E, and the pre-composed layer 2 according to a layer sequence, to obtain the third image.

In another example, as shown in FIG. 7, the electronic device performs pre-composition on a layer A to a layer D to obtain a pre-composed layer 1, and performs pre-composition on a layer G to a layer K to obtain a pre-composed layer 2. Further, layer composition is performed on the pre-composed layer 1, the layer E, a layer F, and the pre-composed layer 2 according to a layer sequence, to obtain the third image.

In another example, as shown in FIG. 8, the electronic device performs pre-composition on a layer A to a layer D to obtain a pre-composed layer 1, and performs pre-composition on a layer H to a layer K to obtain a pre-composed layer 2. Further, layer composition is performed on the pre-composed layer 1, the layer E, a layer F, a layer G, and the pre-composed layer 2 according to a layer sequence, to obtain the third image.

In another example, as shown in FIG. 9, the electronic device performs pre-composition on a layer A to a layer D to obtain a pre-composed layer 1, performs pre-composition on a layer G and the layer F to obtain a pre-composed layer 2, and performs pre-composition on a layer I to a layer K to obtain a pre-composed layer 3. Further, layer composition is performed on the pre-composed layer 1, the layer E, the pre-composed layer 2, a layer H, and the pre-composed layer 3, to obtain the third image.

In another possible design, the electronic device may sequentially combine the plurality of layers according to the layer sequence. For example, as shown in FIG. 6, the electronic device sequentially performs composition in a sequence of a layer A to a layer K, to obtain the third image.

The following describes the process of obtaining the second image.

The first layer and the second layer may be a same layer, or may be different layers.

In a possible case, the first layer and the second layer are a same layer. FIG. 6 is used as an example. Both the first layer and the second layer are a layer E. In other words, layers on which the user performs operations at two times are both the layer E. In response to the first user operation, the electronic device performs layer composition based on a pre-composed layer 1, the layer E, and a pre-composed layer 2, to obtain the second image.

In another possible case, the first layer and the second layer are not a same layer. FIG. 6 is used as an example. Assuming that the first user operation is an operation on a layer F in the plurality of layers of the third image, in response to the first user operation, the electronic device performs layer composition based on a pre-composed layer 1 and the layer F, to obtain the second image. More specifically, the electronic device sequentially combines the pre-composed layer 1, the layer E, the layer F, and a layer G to a layer K, to obtain the second image.

Optionally, the electronic device may further determine, from the pre-composed layer 1, the layer E, and the layer G to the layer K, at least two layers that satisfy the associative law and that are consecutive in the layer sequence, that is, determine the target layers, and further perform pre-composition on the target layers.

For example, the electronic device traverses the pre-composed layer 1, the layer E, and each of the layer G to the layer K to determine target layers, and further performs pre-composition on the target layers to obtain a pre-composed layer 3. The pre-composed layer 3 may be used to compose an image when the user performs an operation on a layer in the second image.

Optionally, performing layer composition based on the pre-composed layer and the first layer to obtain the second image includes: performing layer composition on the pre-composed layer, the first layer, and a remaining layer to obtain the second image, where the remaining layer is a layer other than the target layers and the second layer in the plurality of layers (if the second user operation is an operation of opening the first image, the plurality of layers are a plurality of layers of the first image; or if the second user operation is an operation on the second layer in the plurality of layers of the first image, the plurality of layers are a plurality of layers of the third image).

In other words, the electronic device may directly perform layer composition on the pre-composed layer, the second layer, and the remaining layer, to obtain the second image. This saves time for combining the target layers again, and helps improve composition efficiency.

It may be understood that, in this application, after an operation is performed on a layer in the plurality of layers of the first image, content of the layer may be modified. Therefore, content of the second image, the plurality of layers of the third image, and the plurality of layers of the first image may be different, but quantities of layers are the same.

Optionally, the method 500 further includes step 530: Display the second image, where the second image is an image obtained based on the first user operation.

After obtaining the second image, the electronic device may display the second image by using a user interface.

Based on the foregoing technical solutions, the pre-composed layer is obtained by performing pre-composition on the at least two layers that are consecutive in the layer sequence in the plurality of layers and that satisfy the associative law. When the user performs an operation on a layer (for example, the first layer) in the plurality of layers, the electronic device may directly perform layer composition based on the pre-composed layer obtained through pre-composition. In other words, a composition operation on the layers that satisfy the associative law and that are consecutive in the layer sequence is omitted. This helps reduce a processing amount in a layer composition process, improve composition efficiency, and resolve problems of display freezing and a display delay. In other words, after performing the operation on the layer, the user can more quickly see an image obtained based on the operation, thereby helping improve user experience.

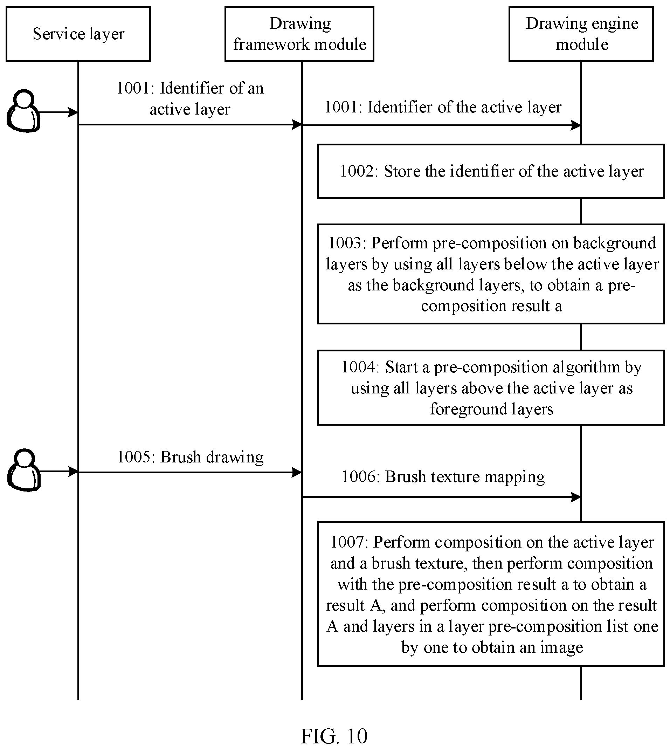

The following describes in detail a pre-composition process with reference to FIG. 10. In an embodiment shown in FIG. 10, descriptions are provided from a perspective of interaction between functional modules inside an electronic device.

FIG. 10 is a diagram of a detailed procedure of performing pre-composition on target layers according to an embodiment of this application.

In step 1001, a service layer sends an identifier of an active layer.

Step 1001 specifically includes: The service layer sends the identifier of the active layer to a drawing framework module. Correspondingly, the drawing framework module receives the identifier of the active layer. The drawing framework module sends the identifier of the active layer to a drawing engine module.

The active layer is a layer on which a user performs an operation. The identifier of the active layer is used to identify which layer is the active layer.

For example, in response to an operation performed by the user on a layer (for example, an operation of drawing a layer by the user by using a brush), the service layer sends the identifier of the active layer to the drawing framework module. After receiving the identifier of the active layer, the drawing framework module sends the identifier of the active layer to the drawing engine module. For example, FIG. 6 is used as an example. In response to an operation of modifying a layer E by the user (for example, an operation of drawing the layer E by the user by using the brush), the service layer sends an identifier of the layer E to the drawing framework module. After receiving the identifier of the layer E, the drawing framework module sends the identifier of the layer E to the drawing engine module.

In step 1002, the drawing engine module stores the identifier of the active layer.

The drawing engine module stores the identifier of the active layer. When the user draws a layer by using the brush again, the identifier may be used to determine whether the layer has been operated. If the layer has been operated, layer composition may be directly performed on a pre-composed layer and the active layer without a need to compose layers one by one. This helps improve layer composition efficiency. In addition, the drawing engine module can use the active layer as a boundary to classify an upper layer of the active layer as a foreground layer, and classify a lower layer of the active layer as a background layer.

In step 1003, the drawing engine module performs pre-composition on background layers by using all layers below the active layer as the background layers, to obtain a pre-composition result a.

In other words, all the layers below the active layer are denoted as the background layers, and the drawing engine module may perform pre-composition on the background layers to obtain the pre-composition result a.

It may be understood that the drawing engine module may perform pre-composition on the background layers when each of the background layers satisfies an associative law, to obtain the pre-composition result a. In other words, the drawing engine module may determine, according to a pre-composition algorithm in step 1004, whether a layer in the background layers satisfies the associative law.

In step 1004, the drawing engine module starts the pre-composition algorithm by using all layers above the active layer as foreground layers.

In other words, all the layers above the active layer are denoted as the foreground layers, and the drawing engine module may start the pre-composition algorithm for the foreground layers.

Step 1004 specifically includes the following steps.
1. Traverse a layer attribute of each layer in all the foreground layers.
   The layer attribute may be, for example, a layer blending mode of the layer. The drawing engine module may traverse a layer blending mode of each of the foreground layers, and then determine, based on the layer blending mode of each layer, whether each layer satisfies the associative law. For example, for a layer A, the layer A may be combined with an upper layer and a lower layer according to a layer blending mode of the layer A based on different composition sequences, and whether the layer A satisfies the associative law is determined based on a composition result.
2. Determine a layer that does not satisfy the associative law.
   For a layer, the drawing engine module may determine whether a pre-composed layer obtained by first performing pre-composition on the layer and an upper layer and then performing pre-composition with a lower layer is the same as a pre-composed layer obtained by first performing pre-composition with the lower layer and then performing pre-composition with the upper layer. If the pre-composed layers are the same, the layer satisfies the associative law. If the pre-composed layers are different, the layer does not satisfy the associative law.
3. Traverse, by using the layer that does not satisfy the associative law as a boundary, all layers above the layer that does not satisfy the associative law to determine whether the layers satisfy the associative law.
   For example, FIG. 9 is used as an example. The drawing engine module determines that the layer F and the layer G satisfy the associative law, and further determines that the layer H does not satisfy the associative law. In this case, the layer H is used as a boundary to further determine whether each of all layers above the layer H satisfies the associative law.
4. Perform pre-composition on at least two layers that satisfy the associative law and that are consecutive in a layer sequence, to obtain and store a pre-composition result (for example, a pre-composition result b, a pre-composition result c, and a pre-composition result d).
5. Form a layer pre-composition list (list) by using pre-composition results (for example, a pre-composition result b, a pre-composition result c, and a pre-composition result d) obtained through pre-composition on layers that do not satisfy the associative law, or layers that satisfy the associative law but that are inconsecutive in the layer sequence, and layers that satisfy the associative law and that are consecutive in the layer sequence in the foreground layers.

For example, FIG. 9 is used as an example. The layer pre-composition list includes a pre-composition result obtained through pre-composition on the layer G and the layer F, the layer H, and a pre-composition result obtained through pre-composition on the layer I to the layer K.

In step 1005, the service layer sends a brush drawing notification to the drawing framework module in response to a user operation.

The brush drawing may include one or more strokes.

The user operation may be, for example, an operation of drawing one or more strokes by the user on the active layer by using the brush. In other words, the user performs an operation on the active layer again, and in response to the operation performed by the user on the active layer again (for example, drawing the active layer by using the brush), the service layer sends the notification to the drawing framework module, so that the drawing framework module notifies the drawing engine module.

In step 1006, the drawing framework module notifies the drawing engine module to map a texture to the active layer.

After receiving the notification, the drawing engine module performs step 1007.

In step 1007, the drawing engine module performs composition on the active layer and the brush texture, then performs composition with the pre-composition result a to obtain a result A, and performs composition on the result A and layers in the layer pre-composition list one by one to obtain an image.

The brush texture is an attribute setting of the brush. A texture effect of brush drawing may be changed by changing the brush texture. That the drawing engine module performs composition on the active layer and the brush texture may be understood as that when the user draws the active layer by using the brush, the drawing engine module combines the brush texture with the drawn layer (that is, the active layer). In this application, before combining the active layer and the pre-composition result a, the drawing engine module may first combine the brush texture with the active layer, and then perform composition with the pre-composition result a to obtain a result A.

The drawing engine module may further display the image on a screen.

For example, FIG. 9 is used as an example. In response to an operation performed by the user on the active layer again, the drawing engine module maps the texture to the active layer, and further performs composition with the pre-composition result a (obtained through pre-composition on the background layers), to obtain the result A. The result A is then combined with a pre-composition result b (obtained through pre-composition on the layer G and the layer F) to obtain a result B. The result B is then combined with the layer H to obtain a result C. The result C is then combined with a pre-composition result c (obtained through pre-composition on the layer I to the layer K) to obtain an image.

It should be understood that the steps shown in FIG. 10 are merely examples. In an actual application scenario, a sequence of the steps in the method shown in FIG. 10 may be different. For example, the drawing engine module may first perform step 1004, and then perform step 1003. In addition, some interaction steps may be added or reduced. This is not limited in this application.

In the embodiment shown in FIG. 10, the drawing engine module determines the target layers in the foreground layers and the target layers in the background layers, and separately performs pre-composition on the target layers in the foreground layers and the target layers in the background layers to obtain respective pre-composed layers. In this way, when the user operates a layer again, the drawing engine module may directly perform layer composition based on the pre-composed layers and the layer operated by the user, to obtain an image. This helps reduce a processing amount in a layer composition process, improve composition efficiency, and further improve user experience.

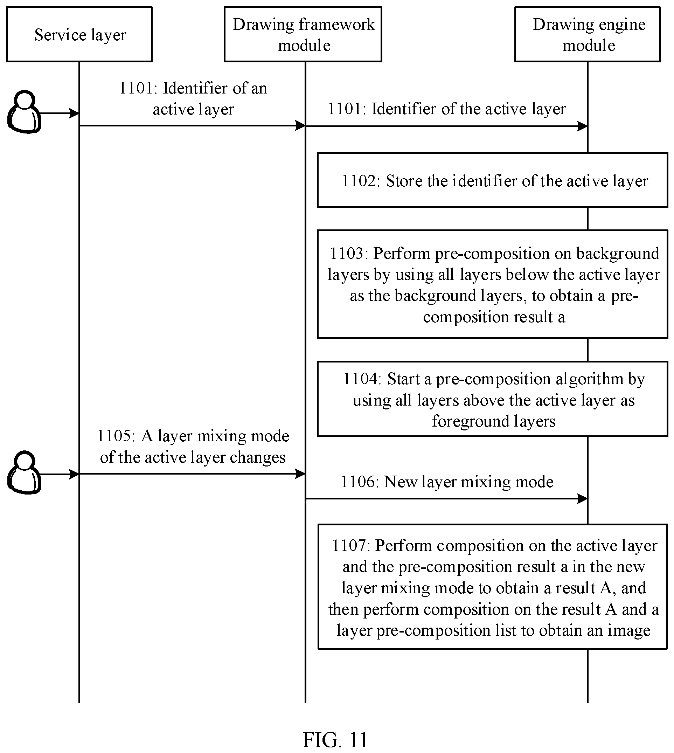

FIG. 11 is a diagram of a detailed procedure of changing a layer blending mode according to an embodiment of this application.

In step 1101, a service layer sends an identifier of an active layer.

Step 1101 specifically includes: The service layer sends the identifier of the active layer to a drawing framework module. Correspondingly, the drawing framework module receives the identifier of the active layer. The drawing framework module sends the identifier of the active layer to a drawing engine module.

In step 1102, the drawing engine module stores the identifier of the active layer.

In step 1103, the drawing engine module performs pre-composition on background layers by using all layers below the active layer as the background layers, to obtain a pre-composition result a.

In step 1104, the drawing engine module starts the pre-composition algorithm by using all layers above the active layer as foreground layers.

Step 1004 specifically includes the following steps.
1. Traverse a layer attribute of each layer in all the foreground layers.
2. Determine a layer that does not satisfy the associative law.
3. Traverse, by using the layer that does not satisfy the associative law as a boundary, all layers above the layer that does not satisfy the associative law to determine whether the layers satisfy the associative law.
4. Perform pre-composition on at least two layers that satisfy the associative law and that are consecutive in a layer sequence, to obtain and store a pre-composition result (for example, a pre-composition result b, a pre-composition result c, and a pre-composition result d).
5. Form a layer pre-composition list by using pre-composition results (for example, a pre-composition result b, a pre-composition result c, and a pre-composition result d) obtained through pre-composition on layers that do not satisfy the associative law, or layers that satisfy the associative law but that are inconsecutive in the layer sequence, and layers that satisfy the associative law and that are consecutive in the layer sequence in the foreground layers.

A procedure of step 1101 to step 1104 is the same as that of step 1001 to step 1004 in FIG. 10. For more detailed descriptions, refer to FIG. 10.

In step 1105, in response to a user operation, the service layer sends, to the drawing framework layer, a notification indicating that a layer blending mode of the active layer is changed.

The user may modify the layer blending mode of the active layer, for example, perform color blending by using a higher-order color tuning method. In response to an operation of modifying the layer blending mode of the active layer by the user, the service layer sends, to the drawing framework layer, the notification indicating that the layer blending mode of the active layer is changed.

In step 1106, the drawing framework module sends a new layer blending mode to the drawing engine module.

That is, the drawing framework module sends the newly set blending mode to the drawing engine module, and correspondingly, the drawing engine module receives the new layer blending mode.

In step 1107, the drawing engine module performs composition on the active layer and the pre-composition result a in the new layer blending mode to obtain a result A, and then performs composition on the result A and a layer pre-composition list to obtain an image.

The drawing engine module may further display the image on a screen.

For example, FIG. 9 is used as an example. In response to an operation of changing the layer blending mode of the active layer by the user, the drawing engine module performs composition on the active layer and the pre-composition result a (obtained through pre-composition on the background layers) in the new layer blending mode, to obtain the result A. The result A is then combined with a pre-composition result b (obtained through pre-composition on the layer G and the layer F) to obtain a result B. The result B is then combined with the layer H to obtain a result C. The result C is then combined with a pre-composition result c (obtained through pre-composition on the layer I to the layer K) to obtain an image, and the image is displayed on the screen.

In the embodiment shown in FIG. 11, the drawing engine module performs pre-composition on layers that satisfy the associative law and that are consecutive in the layer sequence in the plurality of layers included in the image, and stores data of the pre-composed layer. In this way, the data of the pre-composed layer may be used for image composition when the user performs an operation on the active layer again. For example, when the user changes the layer blending mode of the active layer, the data of the pre-composed layer may be used, to avoid combining layers one by one according to the layer sequence each time. This helps reduce a processing amount in a layer composition process, reduce display freezing, and improve smoothness. In other words, once the user performs modification, the user can see a modified image in time, thereby helping improve user experience.

It may be understood that, in an actual scenario, there may be a problem that an image including a relatively large quantity of layers cannot be displayed due to relatively low performance of an electronic device. Therefore, when a quantity of layers included in the image is greater than a maximum quantity of layers supported by the electronic device, and the image cannot be normally displayed, some layers may be merged, to reduce the quantity of layers, so that the image and a merged layer obtained through merging are smoothly displayed.

Currently, when a to-be-merged layer pair is selected, a layer pair whose confidence exceeds a threshold is usually selected from a plurality of layer pairs. The plurality of layer pairs are obtained by performing a Cartesian product on a plurality of layers of the image. In this case, a sequence of the layers may be damaged, and therefore, complete display of the image is affected.

Therefore, this application provides another layer processing method. An electronic device forms at least one layer pair by using two adjacent layers in a plurality of layers included in an image, then determines a to-be-merged target layer pair from the at least one layer pair based on confidence of the layer pair, and then merges the target layer pair. In this way, not only a quantity of layers can be reduced, but also because the layer pair is adjacent, it can be ensured that a sequence between layers is not damaged, thereby reducing impact on the image.

The layer processing method provided in this application is described in detail below with reference to specific embodiments.

It should be understood that the method is described from a perspective of an electronic device in the following embodiments, but this should not constitute any limitation on an execution body of the method. The method provided in embodiments of this application can be performed, provided that a computer program that records the method provided in embodiments of this application can be run. For example, the electronic device may alternatively be replaced with a component (for example, a chip or a chip system) configured in the electronic device, or another functional module that can invoke and execute a program. This is not limited in embodiments of this application.

FIG. 12 is a schematic flowchart of another layer processing method 1200 according to an embodiment of this application. The method 1200 shown in FIG. 12 may include step 1210 to step 1230. The following describes the steps in the method 1200 in detail.

In step 1210, confidence of each of at least one layer pair is determined.

Each of the at least one layer pair includes any two adjacent layers in a plurality of layers of a first image. For example, if the plurality of layers of the first image include a layer 1 to a layer 5, layer pairs are {layer 1, layer 2}, {layer 2, layer 3}, {layer 3, layer 4}, and {layer 4, layer 5}.

For example, an electronic device determines confidence of every two adjacent layers (a layer pair) in the plurality of layers included in the first image.

Optionally, before determining the confidence of each of the at least one layer pair, the method further includes: determining whether a quantity of to-be-displayed layers exceeds a maximum quantity of layers supported by the electronic device.

For example, the electronic device determines whether the quantity of to-be-displayed layers exceeds the maximum quantity of layers. If the quantity of to-be-displayed layers exceeds the maximum quantity of layers, the electronic device further determines the confidence of each layer pair. If the quantity of to-be-displayed layers does not exceed the maximum quantity of layers, the electronic device displays the to-be-displayed layers. In addition, the electronic device may further display the first image.

Optionally, the confidence of each layer pair is determined based on an association degree and/or a coverage degree of the layer pair, the association degree of the layer pair is used to reflect a physical distance between two layers in the layer pair in the first image, and the coverage degree of the layer pair is used to reflect an overlapping degree of the two layers in the layer pair in the first image.

For example, a shorter physical distance between the two layers in the layer pair in the first image indicates a higher association degree of the layer pair; and a higher degree of overlapping between the two layers in the layer pair in the first image indicates a higher coverage degree of the layer pair.

In a possible design, the confidence of the layer pair is determined based on the association degree of the layer pair. In other words, the electronic device determines a target layer pair based on the association degree of the layer pair.

In another possible design, the confidence of the layer pair is determined based on the coverage degree of the layer pair. In other words, the electronic device determines a target layer pair based on the coverage degree of the layer pair.

In another possible design, the confidence of the layer pair is determined based on both the association degree of the layer pair and the coverage degree of the layer pair. In other words, the electronic device determines a target layer pair based on the association degree and the coverage degree of the layer pair. For example, confidence=association degree×K1+coverage degree×K2, where K1 is a weight of a preset association degree, K2 is a weight of a preset coverage degree, 0≤K1≤1, and 0≤K2≤1.

With reference to the accompanying drawings, the following explains in detail the association degree and the coverage degree of the layer pair by using an example in which the layer pair includes a first layer and a second layer.

For example, the association degree of the layer pair satisfies: association degree=max(area of the first layer, area of the second layer)/area of a union set region of the first layer and the second layer, where a boundary of the union set region is determined by a boundary of the first layer and a boundary of the second layer.

The electronic device may determine the association degree of the layer pair based on the area of the first layer, the area of the second layer, the area of the union set region, and the foregoing formula.

Before the association degree of the layer pair is described, determining an area of a layer is first described.

FIG. 13 is a diagram of an effective area of a layer according to an embodiment of this application.

As shown in FIG. 13, the first image includes a plurality of layers, for example, layers such as a left ear of a person, a right ear of the person, and hair of the person. A layer 1 (hair of the person) is used as an example. An effective region of the layer 1 is a region enclosed by an upper boundary, a lower boundary, a left boundary, and a right boundary of the hair. A height and a width of the region are shown in the figure. An effective area (or area for short) of the layer 1 is a product of the height and the width.

It should be understood that the effective area of the layer shown in FIG. 13 is merely an example, and should not constitute any limitation on embodiments of this application. For example, a shape of the effective region of the layer may alternatively be a circle, for example, a circle formed by using a center of the hair as an origin and a distance between farthest points (where the farthest points are two points that are farthest from each other in a plurality of points that form the boundary of the layer 1) as a diameter. Alternatively, a shape of the effective region of the layer may be an irregular figure. This is not limited in this application.

The union set region of the layer pair is a union set region obtained based on the effective region of the layer. In a possible design, the union set region is a square. In this design, the shape of the effective region of the layer may be a square, or may be another shape. This is not limited in this application.

For example, the union set region is enclosed by upper, lower, left, and right boundaries, the upper boundary of the union set region is an uppermost boundary in upper boundaries of the first layer and the second layer, the lower boundary of the union set region is a lowermost boundary in lower boundaries of the first layer and the second layer, the left boundary of the union set region is a leftmost boundary in left boundaries of the first layer and the second layer, and the right boundary of the union set region is a rightmost boundary in right boundaries of the first layer and the second layer.

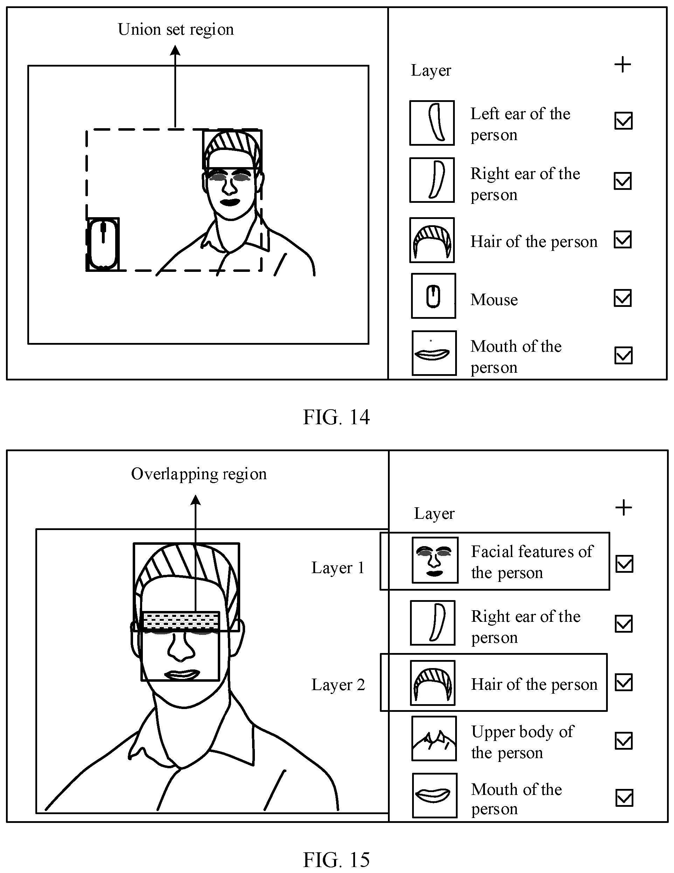

FIG. 14 is a diagram of a union set region according to an embodiment of this application.

As shown in FIG. 14, the first image includes a plurality of layers, for example, layers such as a left ear of a person, a right ear of the person, hair of the person, and a mouse. A layer 1 (hair of the person) and a layer 2 (mouse) are used as an example of a layer pair, and the union set region is a region framed by a dashed line. It can be learned that the upper boundary of the union set region is an uppermost boundary in upper boundaries of the layer 1 and the layer 2, the lower boundary of the union set region is a lowermost boundary in lower boundaries of the layer 1 and the layer 2, the left boundary of the union set region is a leftmost boundary in left boundaries of the layer 1 and the layer 2, and the right boundary of the union set region is a rightmost boundary in right boundaries of the layer 1 and the layer 2.

It may be understood that a shape of the union set region may alternatively be another shape, for example, a circle, or may be another irregular shape.

For example, when the shape of the union set region is a circle, a diameter of the union set region is a longest distance between a plurality of points forming the boundary of the layer 1 and a plurality of points forming the boundary of the layer 2.

The following describes the coverage degree of the layer pair.

The coverage degree of the layer pair satisfies: coverage degree=area of an overlapping region of the first layer and the second layer/min(area of the first layer, area of the second layer).

The electronic device may determine the coverage degree of the layer pair based on the area of the first layer, the area of the second layer, the area of the overlapping region, and the foregoing formula.

FIG. 15 is a diagram of an overlapping region according to an embodiment of this application.

As shown in FIG. 15, the first image includes a plurality of layers, for example, layers such as facial features of a person, a right ear of the person, and hair of the person. A layer 1 (facial features of the person) and a layer 2 (hair of the person) are used as an example of a layer pair, and the overlapping region is a shadow part.

After determining the confidence of each layer pair, the electronic device determines the target layer pair based on the confidence of each layer pair.

In a possible design, the confidence is determined based on the association degree, and the target layer pair is a layer pair with a highest association degree.

In another possible design, the confidence is determined based on the coverage degree, and the target layer pair is a layer pair with a lowest coverage degree.

In another possible design, the confidence of the layer pair is determined based on both the association degree of the layer pair and the coverage degree of the layer pair, and the target layer pair is a layer pair with highest confidence.

In step 1220, the target layer pair in the at least one layer pair is merged, to obtain a merged layer.

For example, after determining the target layer pair, the electronic device merges the target layer pair to obtain the merged layer. It may be understood that if the quantity of layers after merging still exceeds the maximum quantity of layers supported by the electronic device, a target layer pair may continue to be determined based on the merged layer and a remaining layer, and then the target layer pair is merged. The remaining layer is a layer other than the target layer pair in the plurality of layers.

In step 1230, the merged layer and a layer other than the target layer pair in the plurality of layers are displayed.

For example, when a quantity of to-be-displayed layers after merging is less than or equal to the maximum quantity of layers, the electronic device displays the merged layer and a layer other than the target layer pair in the plurality of layers. In addition, the electronic device may further display the first image.

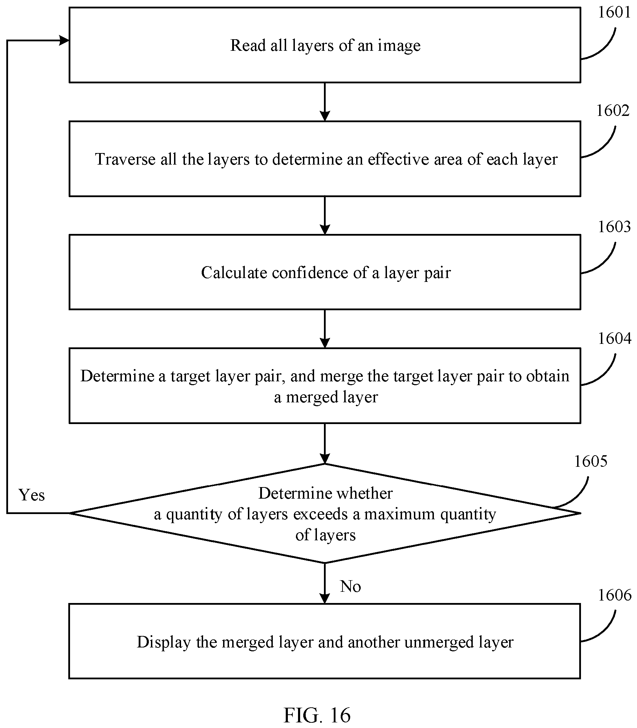

FIG. 16 is a diagram of a detailed procedure of a layer merging process according to an embodiment of this application. With reference to FIG. 16, the following describes in detail a process of merging layers until a quantity of layers is less than or equal to a maximum quantity of layers.

In step 1601, all layers of an image are read.

The image includes a plurality of layers, and an electronic device may read each of the plurality of layers.

In step 1602, all the layers are traversed to determine an effective area of each layer.

The electronic device traverses each of the plurality of layers, and determines the effective area of each layer. For a process of determining the effective area of the layer, refer to related descriptions in FIG. 12. Details are not described herein again.

In step 1603, confidence of a layer pair is calculated.

In an example, the confidence of the layer pair is determined based on an association degree of the layer pair. The electronic device determines the association degree of the layer pair based on effective areas of two layers in the layer pair and an area of a union set region. For a process of determining the association degree of the layer pair, refer to related descriptions in FIG. 12. Details are not described herein again.

In another example, the confidence of the layer pair is determined based on a coverage degree of the layer pair. The electronic device determines the coverage degree of the layer pair based on effective areas of two layers in the layer pair and an area of an overlapping region. For a process of determining the coverage degree of the layer pair, refer to related descriptions in FIG. 12. Details are not described herein again.

In another example, the confidence of the layer pair is determined based on both a coverage degree and an association degree of the layer pair. The electronic device determines the coverage degree of the layer pair based on effective areas of two layers in the layer pair and an area of an overlapping region, determines the association degree of the layer pair based on the effective areas of the two layers in the layer pair and an area of a union set region, and then determines the confidence based on the association degree and the coverage degree. For a process of determining the confidence of the layer pair, refer to related descriptions in FIG. 12. Details are not described herein again.

In step 1604, a target layer pair is determined, and the target layer pair is merged to obtain a merged layer.

For example, the electronic device determines the target layer pair based on the confidence of each layer pair, and merges the target layer pair to obtain the merged layer. For a more detailed process, refer to related descriptions in FIG. 12. Details are not described herein again.

In step 1605, whether a quantity of layers exceeds a maximum quantity of layers is determined.

If the quantity of layers after merging still exceeds the maximum quantity of layers supported by the electronic device, step 1601 continues to be performed, that is, a target layer pair continues to be determined based on the merged layer and a remaining layer, and then the target layer pair is merged. The remaining layer is a layer other than the target layer pair in the plurality of layers.

If the quantity of layers after merging does not exceed the maximum quantity of layers supported by the electronic device, step 1606 is performed.

In step 1606, the merged layer and another unmerged layer are displayed.

For example, when a quantity of to-be-displayed layers after merging is less than or equal to the maximum quantity of layers, the electronic device displays the merged layer and a layer other than the target layer pair in the plurality of layers. In addition, the electronic device may further display the first image.

Based on the foregoing technical solutions, the electronic device may determine the to-be-merged target layer pair based on the confidence of each of the at least one layer pair, merge the target layer pair, and display the merged layer and the layer other than the target layer pair. In this way, a quantity of displayed layers is reduced, a performance requirement on the electronic device can be lowered, and a user can view an image with a relatively large quantity of layers by using a device with relatively low performance. This helps improve user experience.

An embodiment of this application further provides an electronic device, to implement the method shown in FIG. 5, FIG. 10, FIG. 11, FIG. 12, or FIG. 16. The electronic device includes a corresponding module configured to perform the foregoing method. The module included in the electronic device may be implemented by using software and/or hardware.

An embodiment of this application further provides an electronic device. The electronic device includes a memory and a processor. The memory is configured to store a computer program, and the processor is configured to invoke and execute the computer program, so that the electronic device implements the method shown in FIG. 5, FIG. 10, FIG. 11, FIG. 12, or FIG. 16.

An embodiment of this application further provides a chip system. The chip system includes at least one processor, configured to implement the method shown in FIG. 5, FIG. 10, FIG. 11, FIG. 12, or FIG. 16, for example, receive or process data and/or information in the foregoing method.

In a possible design, the chip system further includes a memory, the memory is configured to store program instructions and data, and the memory is located inside or outside the processor.

The chip system may include a chip, or may include a chip and another discrete component.

An embodiment of this application further provides a computer program product. The computer program product includes a computer program (which may also be referred to as code or instructions). When the computer program is run, a computer is enabled to perform the method shown in FIG. 5, FIG. 10, FIG. 11, FIG. 12, or FIG. 16.

An embodiment of this application further provides a computer-readable storage medium. The computer-readable storage medium stores a computer program (which may also be referred to as code or instructions). When the computer program is run, a computer is enabled to perform the method shown in FIG. 5, FIG. 10, FIG. 11, FIG. 12, or FIG. 16.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

Terms such as "unit" and "module" used in this specification may indicate computer-related entities, hardware, firmware, combinations of hardware and software, software, or software being executed. The unit and the module in embodiments of this application have a same meaning, and may be used in a cross manner.

A person of ordinary skill in the art may be aware that, illustrative logical blocks (illustrative logical block) and steps (step) described with reference to embodiments disclosed in this specification can be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

In the foregoing embodiments, all or some of the functions of the functional units may be implemented by using software, hardware, firmware, or any combination thereof. When software is used to implement the functions, all or some of the functions may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state disk (solid state disk, SSD)).

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A layer processing method, comprising:
displaying a first image, wherein the first image comprises a plurality of layers; and
performing layer composition based on a pre-composed layer and a first layer in response to a first user operation, to obtain a second image, wherein the first user operation is an operation performed by a user on the first layer in the plurality of layers, the pre-composed layer is obtained by performing pre-composition on target layers in the plurality of layers, and the target layers are at least two layers that are consecutive in a layer sequence in the plurality of layers and that satisfy an associative law.

2. The method according to claim 1, wherein before performing layer composition based on the pre-composed layer and the first layer in response to the first user operation, to obtain the second image, the method further comprises:
performing pre-composition on the target layers in the plurality of layers in response to a second user operation, to obtain the pre-composed layer.

3. The method according to claim 2, wherein the second user operation comprises an operation of opening the first image by the user or an operation performed by the user on a second layer in the plurality of layers.

4. The method according to claim 3, wherein the operation performed by the user on the second layer in the plurality of layers comprises: an operation of modifying the second layer by the user, or an operation of selecting a layer blending mode of the second layer by the user.

5. The method according to any one of claims 1 to 4, wherein the first layer does not belong to the target layers.

6. The method according to any one of claims 1 to 5, wherein the method further comprises: determining the target layers from the plurality of layers comprised in the first image.

7. The method according to any one of claims 1 to 6, wherein any one of the target layers satisfies: a pre-composed layer obtained by first performing pre-composition with an upper layer and then performing pre-composition with a lower layer is the same as a pre-composed layer obtained by first performing pre-composition with the lower layer and then performing pre-composition with the upper layer, wherein the upper layer and the lower layer are determined according to the layer sequence.

8. The method according to any one of claims 1 to 7, wherein performing layer composition based on the pre-composed layer and the first layer in response to the first user operation, to obtain the second image comprises:
performing layer composition on the pre-composed layer, the first layer, and a remaining layer in response to the first user operation, to obtain the second image, wherein the remaining layer is a layer other than the target layers and the first layer in the plurality of layers.

9. An electronic device, comprising:
a display module, configured to display a first image, wherein the first image comprises a plurality of layers; and
a drawing engine module, configured to perform layer composition based on a pre-composed layer and a first layer in response to a first user operation, to obtain a second image, wherein the first user operation is an operation performed by a user on the first layer in the plurality of layers, the pre-composed layer is obtained by performing pre-composition on target layers in the plurality of layers, and the target layers are at least two layers that are consecutive in a layer sequence in the plurality of layers and that satisfy an associative law.

10. The electronic device according to claim 9, wherein the drawing engine module is further configured to perform pre-composition on the target layers in the plurality of layers in response to a second user operation, to obtain the pre-composed layer.

11. The electronic device according to claim 10, wherein the second user operation comprises an operation of opening the first image by the user or an operation performed by the user on a second layer in the plurality of layers.

12. The electronic device according to claim 11, wherein the operation performed by the user on the second layer in the plurality of layers comprises: an operation of modifying the second layer by the user, or an operation of selecting a layer blending mode of the second layer by the user.

13. The electronic device according to any one of claims 9 to 12, wherein the first layer does not belong to the target layers.

14. The electronic device according to any one of claims 9 to 13, wherein the drawing engine module is further configured to determine the target layers from the plurality of layers comprised in the first image.

15. The electronic device according to any one of claims 9 to 14, wherein any one of the target layers satisfies: a pre-composed layer obtained by first performing pre-composition with an upper layer and then performing pre-composition with a lower layer is the same as a pre-composed layer obtained by first performing pre-composition with the lower layer and then performing pre-composition with the upper layer, wherein the upper layer and the lower layer are determined according to the layer sequence.

16. The electronic device according to any one of claims 9 to 15, wherein the drawing engine module is specifically configured to perform layer composition on the pre-composed layer, the first layer, and a remaining layer in response to the first user operation, to obtain the second image, wherein the remaining layer is a layer other than the target layers and the first layer in the plurality of layers.

17. An electronic device, comprising a processor and a memory, wherein
the memory is configured to store a computer program; and
the processor is configured to invoke the computer program, to enable the electronic device to perform the method according to any one of claims 1 to 8.

18. A computer-readable storage medium, wherein the storage medium stores a computer program or instructions, and when the computer program or the instructions are executed by a computer, the method according to any one of claims 1 to 8 is implemented.

19. A computer program product, wherein the computer program product comprises instructions, and when the instructions are run by a computer, the method according to any one of claims 1 to 8 is implemented.
